# EUROPÄISCHE PATENTSCHRIFT

(11) **EP 2 605 925 B1**
(45) Veröffentlichungstag und Bekanntmachung des Hinweises auf die Patenterteilung: **30.04.2014**
(21) Anmeldenummer: 11735389.6
(22) Anmeldetag: 20.07.2011
(51) Int. Cl.: B60G 17/015, B60G 13/14, H02K 16/00, H02K 7/06, H02K 7/116, H02K 7/07

(54) **RADAUFHÄNGUNG FÜR EIN KRAFTFAHRZEUG**
WHEEL SUSPENSION FOR A MOTOR VEHICLE
SUSPENSION DE ROUE POUR UN VÉHICULE À MOTEUR

(30) Priorität: 21.08.2010 DE 102010035088
(43) Veröffentlichungstag der Anmeldung: 26.06.2013
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2011/003626
(87) Internationale Veröffentlichungsnummer: WO 2012/025176

(56) Entgegenhaltungen:
- EP-A1- 1 582 383
- EP-A1- 2 098 390
- EP-A2- 1 296 440
- WO-A1-01/67584
- DE-A1- 3 925 812
- DE-A1- 10 115 858
- DE-A1-102010 008 009

## Beschreibung

Die Erfindung betrifft eine Radaufhängung für ein Kraftfahrzeug nach dem Oberbegriff des Patentanspruches 1.

Die Radaufhängung eines Kraftfahrzeuges kann einen elektrischen Stoßdämpfer aufweisen, der die betriebsbedingten Fahrzeugschwingungen dämpft. Der elektrische Dämpfer kann einen Generator aufweisen, der die Schwingungsenergie in elektrische Energie umwandelt, die über eine entsprechende Leistungselektronik in das Bordnetz des Kraftfahrzeuges gespeist werden kann.

Aus der DE 101 15 858 A1 oder der EP 2 098 390 A1 ist ein solcher elektrischer Schwingungsdämpfer bekannt, dessen Generator auf Grund von betriebsbedingten Auf- und Abbewegungen des Fahrzeugrades antreibbar ist und dadurch eine Induktionsspannung erzeugt.

Zum Antrieb des aus der DE 101 15 858 A1 bekannten Generators ist ein Kugelgewindetrieb vorgesehen, der eine drehfest dem unteren Federteller einer Tragfeder zugeordnete Gewindemutter aufweist, die mit einer Gewindespindel zusammenwirkt. Die Gewindespindel treibt wiederum eine Rotorwelle des Generators zur Erzeugung einer Induktionsspannung an. Alternativ kann der Kugelgewindetrieb auch als ein Zahnstangen-Zahnradgetriebe ausgeführt sein.

Der aus der DE 101 15 858 A1 bekannte Generator des elektrischen Dämpfers sitzt auf einem oberen Tragfederteller, der an einer Anlenkstelle gelenkig am Fahrzeugaufbau angelenkt ist. Zudem ist der Generator innerhalb der Tragfeder angeordnet. Dadurch steht dem Generator nur ein stark reduzierter Bauraum zur Verfügung. Zudem ist die sich einstellende Drehbewegung des im Generator laufenden Rotors im normalen Fahrbetrieb gering, wodurch der Generator insgesamt nur mit reduzierter Effizienz arbeiten kann.

Die Aufgabe der Erfindung besteht darin, eine Radaufhängung mit einem elektrischen Schwingungsdämpfer bereitzustellen, dessen Generator im Fahrbetrieb in effizienter Weise Spannung induzieren kann.

Die Aufgabe ist durch die Merkmale des Patentanspruches 1 gelöst. Bevorzugte Weiterbidlungen der Erfindung sind in den Unteransprüchen offenbart.

Gemäß dem kennzeichnenden Teil des Patentanspruches 1 sind der Stator und der Rotor des Generators über zumindest eine Getriebestufe miteinander verbunden. Erfindungsgemäß ist daher nicht nur der Rotor, sondern zusätzlich auch der Stator des Generators Bestandteil der Getriebestufe. Durch eine solche Konfiguration ergibt sich ein im Vergleich zum oben genannten Stand der Technik unterschiedliches Funktionsprinzip, bei dem der Stator kein feststehendes Bauteil ist, sondern vielmehr beim Dämpfungsvorgang selbst aktiv gedreht wird. Die Drehbewegung des Stators kann über die Getriebestufe zum Rotor übertragen werden. Durch entsprechende Getriebeübersetzungen kann der Rotor mit einer im Vergleich zum Stator wesentlich größeren Drehzahl gedreht werden. Dadurch kann in stark gesteigertem Umfang Induktionsspannung im Generator erzeugt werden.

Zudem ist erfindungsgemäß neben dem Stator und dem Rotor ein Antriebszahnrad eines Zahnstangentriebes ein weiteres Bestandteil der Getriebestufe. Der Zahnstangentrieb ist wiederum mit einem, den translatorischen Radbewegungen folgenden Radträger der Radaufhängung in Antriebsverbindung. Mittels einer Zahnstange des Zahnstangentriebes kann die aus der Radbewegung resultierende translatorische Auf- und Abbewegung des Radträgers über das in der Getriebestufe integrierte Antriebszahnrad direkt in eine Rotation des Rotors bzw. des Stators umgewandelt werden. Der für eine solche Antriebsverbindung erforderliche Bauraum ist deutlich kompakter als der bei einer Hebelanordnung, bei der ein Hebelarm translatorische Radbewegungen in eine Rotordrehbewegung umwandelt.

Im Hinblick auf den begrenzten Bauraum ist es bevorzugt, wenn der Generator des elektrischen Schwingungsdämpfers nicht unmittelbar im Bereich des Radträgers, sondern davon beabstandet angeordnet werden kann. Vor diesem Hintergrund kann die Zahnstange des Zahnstangentriebes ein Radführungselement sein, das sich zwischen dem Radträger und dem Fahrzeugaufbau erstreckt. Das Radführungselement kann dabei an seinem radträgerfernen Ende einen Zahnstangenabschnitt aufweisen, der mit dem oben erwähnten Antriebszahnrad in Zahneingriff ist.

Im Hinblick auf eine weitere Bauraumreduzierung kann der Zahnstangentrieb unmittelbar in einer Anlenkstelle des Radführungselementes am Fahrzeugaufbau integriert sein. In diesem Fall sind das Radführungselement und das damit in Zahneingriff befindliche Antriebszahnrad des Generators als Gelenkpartner anzusehen, und zwar insbesondere am radträgerfernen Ende des Radführungselementes. Die Drehachse des Rotors und des Stators kann für eine bauraumgünstige Gestaltung der Anlenkstelle identisch mit einer Schwenkachse der Anlenkstelle sein. Als Radführungselement im Sinne der Erfindung sind Radlenker zu verstehen, die in an sich bekannter Weise den Radträger mit dem Fahrzeugaufbau verbinden, etwa Querlenker, Längslenker oder Schräglenker. Für eine leichtgängige Übertragung der translatorischen Auf-/Abbewegung des Fahrzeugrades in die Antriebsbewegung des Radführungselementes ist es von Vorteil, wenn das Radführungselement über ein Schwenklager gelenkig am Radträger verbunden ist. Dadurch können unterschiedliche Winkellagen zwischen dem Radträger und dem Radführungselement ausgeglichen werden.

Für eine weitere Bauraumreduzierung kann das Antriebszahnrad des Zahnstangentriebes mittelbar oder unmittelbar den Rotor und/oder den Stator des Generators des elektrischen Schwingungsdämpfers antreiben. Bevorzugt sitzt dabei das Antriebszahnrad als ein Zahnkranz drehfest auf einer Rotorwelle oder außenseitig auf dem Stator.

Eine besonders bauraumreduzierte Gestaltung des elektrischen Schwingungsdämpfers ergibt sich, wenn die zwischen dem Stator und dem Rotor geschaltete, zumindest eine Getriebestufe ein Planetengetriebe ist, deren Baulänge im Vergleich zu anderen Getriebearten stark reduziert ist. Zur weiteren Bauraumreduzierung kann hierbei der Stator des Generators zusammen mit dem radial äußeren Hohlrad des Planetengetriebes der Getriebestufe eine einstückige Baueinheit bilden. Das Hohlrad kann daher als ein Eingangselement der Getriebestufe wirken. Das Ausgangselement dieser Getriebestufe kann bevorzugt das radial innere Sonnenrad sein.

Je nach zu erreichendem Übersetzungsverhältnis zwischen Stator und Rotor kann das radial innere Sonnenrad unmittelbar auf den Rotor abtreiben oder drehfest mit einem Eingangselement einer zweiten Getriebestufe verbunden sein. Diese kann ebenso als ein Planetengetriebe ausgeführt sein, mit dem das Antriebsmoment in einem geeigneten Übersetzungsverhältnis in den Rotor eingeleitet werden kann. Der Planetenträger der ersten Getriebestufe kann drehfest am Fahrzeugaufbau abgestützt sein und somit als eine Drehmomentstütze dienen.

Für den Fall, dass zusätzlich die zweite Getriebestufe vorgesehen ist, kann das Hohlrad des Planetengetriebes der zweiten Getriebestufe als Drehmomentstütze drehfest mit dem Fahrzeugaufbau verbunden sein. Demgegenüber kann das Sonnenrad der zweiten Getriebestufe als Ausgangselement mit der Rotorwelle des Generators verbunden sein.

In einer alternativen Ausführungsform kann das Antriebszahnrad des Zahnstangentriebes unmittelbar drehfest auf der Rotorwelle des Generators sitzen. Die Zahnstange kann zudem beidseitig mit einer ersten Verzahnung und einer zweiten Verzahnung ausgeführt sein. Die erste Verzahnung kann unmittelbar mit dem auf der Rotorwelle sitzenden Antriebszahnrad kämmen. Die zweite Verzahnung der Zahnstange kann dagegen über eine Getriebestufe trieblich mit dem Stator verbunden sein.

Nachfolgend sind zwei Ausführungsbeispiele der Erfindung anhand der beigefügten Figuren beschrieben.

Es zeigen:
- Fig. 1: in grobschematischer Darstellung eine Radaufhängung eines Fahrzeugrades;
- Fig. 2: eine Anlenkstelle eines Radführungselementes der Radaufhängung am Fahrzeugaufbau;
- Fig. 3: in einer schematischen Seitenschnittdarstellung den am Fahrzeugaufbau befestigten elektrischen Dämpfer; und
- Fig. 4: in einer, der Fig. 3 entsprechenden Ansicht das zweite Ausführungsbeispiel.

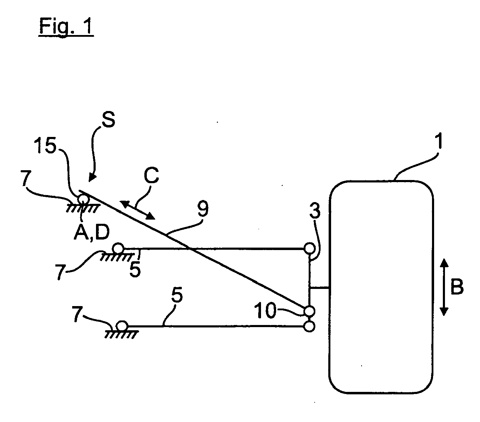

In der Fig. 1 ist die Radaufhängung eines Fahrzeugrades 1 eines Kraftfahrzeuges gezeigt. Das Fahrzeugrad 1 ist an einem Radträger 3 drehgelagert. Der Radträger 3 ist über Querlenker 5 am Fahrzeugaufbau 7 angelenkt. Zusätzlich ist der Radträger 3 über einen Schräglenker 9 an einer Anlenkstelle S mit dem Fahrzeugaufbau 7 verbunden und zwar gelenkig um eine Schwenkachse D. Wie aus der Fig. 1 weiter hervorgeht, ist der Schräglenker 9 über ein Schwenklager 10 am Radträger 3 gekoppelt. Dadurch erfolgt eine leichtgängige Bewegungsübertragung der translatorischen Aufund Abbewegungen B in Richtung auf den elektrischen Schwingungsdämpfer 16.

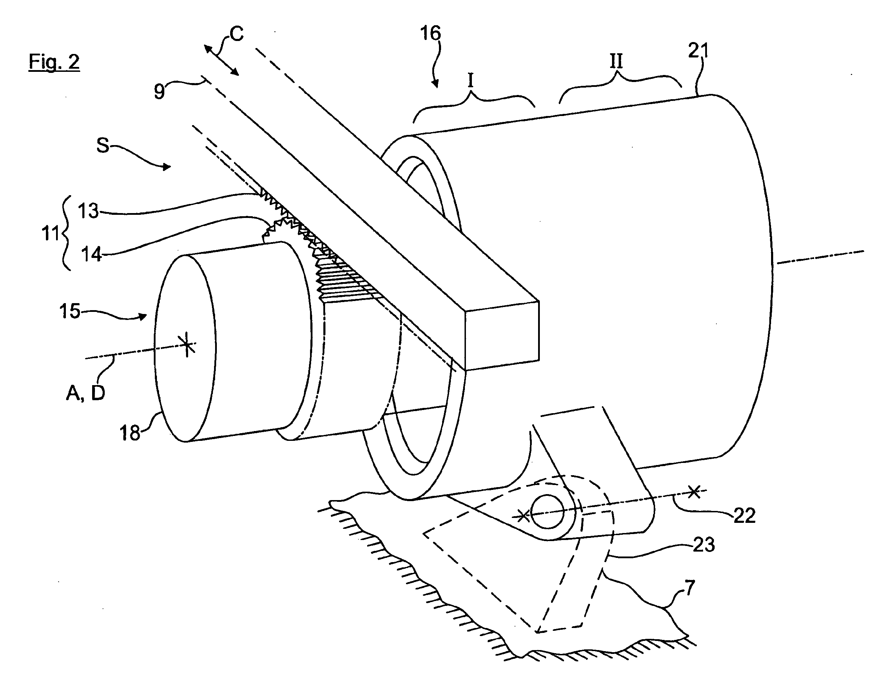

In der Fig. 2 ist die Anlenkstelle S zwischen dem Schräglenker 9 und dem Fahrzeugaufbau 7 vergrößert gezeigt. Die Anlenkung des Schräglenkers 9 erfolgt gemäß der Fig. 2 über einen Zahnstangentrieb 11. Der Zahnstangentrieb 11 weist als Getriebepartner einen Zahnstangenabschnitt 13 auf, der am radträgerfernen Ende des Schräglenkers 9 angeformt ist. Der Zahnstangenabschnitt 13 kämmt mit einem Antriebskranz 14 eines Generators 15, der Bestandteil eines elektrischen Dämpfers 16 ist.

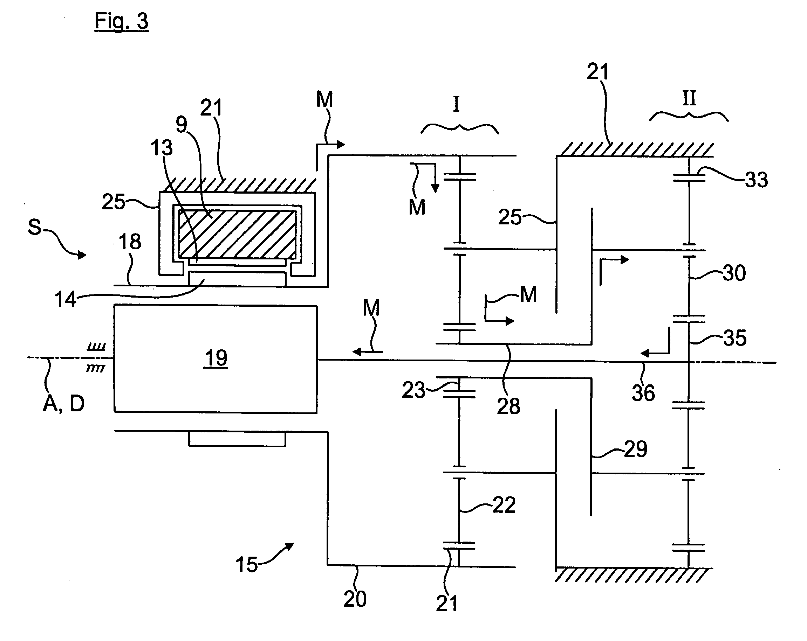

Der Generator 15 kann beispielhaft ein Innenpolgenerator sein, der einen radial äußeren Stator 18 sowie einen damit zusammenwirkenden, in der Fig. 3 gezeigten Rotor 19 enthält. Der in etwa hohlzylindrisch ausgeführte Stator 18 trägt an seiner Innenseite nicht näher gezeigte Induktionswicklungen, die mit ebenfalls nicht gezeigten Elektromagneten des Rotors zusammenwirken. Alternativ dazu können die Induktionswicklungen auch auf dem Rotor sitzen und die Feldmagnete auf dem Stator sitzen. Der Zahnkranz 14 des Zahnstangentriebes 11 ist dabei gemäß der Fig. 2 und 3 drehfest am Außenumfang des Stators 18 angeordnet.

Wie aus der Fig. 2 weiter hervorgeht, ragt der Generator 15 in ein Dämpfergehäuse 21 des elektrischen Dämpfers 16. Das Dämpfergehäuse 21 ist mittels Schraubverbindungen 22 an, in der Fig. 2 Haltekonsolen 23 des Fahrzeugaufbaus 7 drehfest gekoppelt, von denen in der Fig. 2 nur eine gestrichelt gezeigt ist. In dem Dämpfergehäuse 21 sind zwei Getriebestufen I, II vorgesehen, die den Stator 18 trieblich mit dem Rotor 19 des Generators 15 verbinden. Die Getriebestufen I, II sind in der Fig. 3 detaillierter dargestellt. Gemäß der Fig. 3 ist der Stator 18 zum rechten Bildrand hin durch ein Hohlrad 20 nach rechts verlängert. Das im Vergleich zum Stator 18 im Durchmesser größere Hohlrad 20 schließt in Axialrichtung über eine Abstufung an den Stator 18 an und bildet ein Momenten-Eingangselement der als Planetengetriebe gestalteten Getriebestufe I. Die Schwenkachse D der Anlenkstelle S ist dabei bauraumgünstig identisch mit der Drehachse A des Stators 18 bzw. des Rotors 19.

In der als Planetengetriebe ausgeführten Getriebestufe I kämmt das Hohlrad 20 mit seiner Innenverzahnung 21 mit Planetenrädern 22. Diese sind wiederum in Zahneingriff mit einem Sonnenrad 23, das koaxial zur Drehachse A des Rotors 19 angeordnet ist. Die Planetenräder 22 der ersten Getriebestufe I sind in der Fig. 3 an einem Planetenradträger 25 drehbar gelagert. Dieser ist drehfest an dem Dämpfergehäuse 21 angeformt, das über die bereits genannten Haltekonsolen 23 am Fahrzeugaufbau 7 montiert ist.

Das Sonnenrad 23 der ersten Getriebestufe I wird in der Fig. 3 von einer Hohlwelle 28 getragen, auf deren, in der Fig. 3 rechter Stirnseite ein Planetenradträger 29 der zweiten Getriebestufe II angeformt ist. Die zweite Getriebestufe II ist, wie auch die erste Getriebestufe I, als Planetengetriebe ausgeführt, wobei die Planetenräder 30 radial außen mit einer Innenverzahnung 33 des fest am Fahrzeugaufbau 7 montierten Dämpfergehäuses 21 kämmen. Das mit den Planetenrädern 30 in Zahneingriff befindliche Sonnenrad 25 der zweiten Getriebestufe II bildet das Getriebe-Ausgangselement. Das Sonnenrad 35 ist ferner über eine koaxial durch die Hohlwelle 28 geführte Antriebswelle 36 mit dem Rotor 19 des Generators 15 trieblich verbunden.

Wie aus der Fig. 3 weiter hervorgeht, ist die radträgerferne Anlenkstelle S durch den Zahnstangenabschnitt 13 des Schräglenkers 9 und durch den Zahnkranz 14 des Zahnstangentriebes 11 gebildet. Der Querlenker 9 ist dabei in einer nur angedeuteten, im Profil rechteckigen Führungsschiene 25 längsverschiebbar geführt. Die Führungsschiene 25 ist in der Fig. 3 beispielhaft am Dämpfergehäuse 21 montiert. In der Fig. 2 ist die Führungsschiene 25 aus Gründen der Übersichtlichkeit weggelassen.

Während des Fahrbetriebes wird der Radträger 3 bzw. das darin drehgelagerte Fahrzeugrad 1 mit translatorischen Auf- und Abbewegungen B beaufschlagt. Diese Radbewegungen B werden über den Traglenker 9 als ebenfalls translatorische Antriebsbewegungen C in den elektrischen Schwingungsdämpfer 16 eingeleitet, wie es in der Fig. 2 angedeutet ist. Die über den Zahnstangenabschnitt 13 in den Stator 18 eingeleiteten Antriebsmomente werden in einer, in der Fig. 3 gezeigten Momentenflussrichtung M über das Hohlrad 20 in die erste Getriebestufe I übertragen. Über das als Ausgangselement der ersten Getriebestufe I dienende Sonnenrad 23 werden die Antriebsmomente durch den Planetenradträger 29 in die zweite Getriebestufe II geleitet. Die Übersetzungsverhältnisse der beiden Getriebestufen I, II sind dabei so bemessen, dass sich auch bei kleinen bzw. langwelligen Radbewegungen B eine, für eine effektive Spannungsinduktion geeignete Rotordrehzahl ergibt.

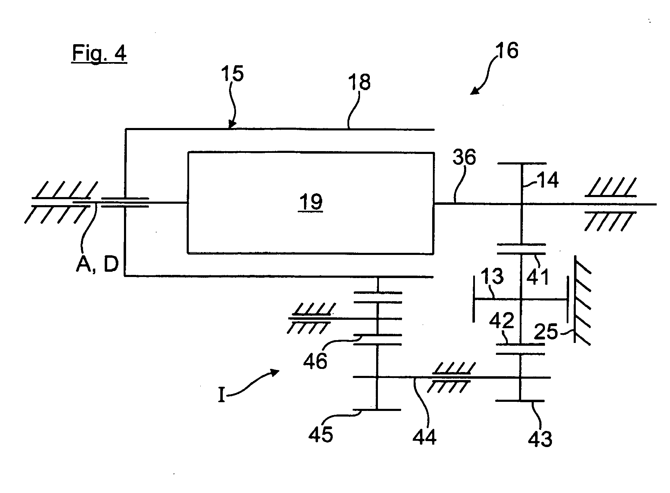

In der Fig. 4 ist ein zweites Ausführungsbeispiel der Erfindung gezeigt, in dem der Rotor 19 ebenfalls über eine Getriebestufe I mit dem Stator 18 trieblich verbunden ist. Wie auch im ersten Ausführungsbeispiel ist das Antriebszahnrad 14 eines Zahnstangentriebes 11 Bestandteil dieser Getriebestufe I. Das Antriebszahnrad 14 wird ebenfalls durch einen Zahnstangenabschnitt 13 des Schräglenkers 9 angetrieben.

Im Unterschied zum ersten Ausführungsbeispiel sitzt das Antriebszahnrad 14 des Zahnstangentriebs nicht auf dem Stator 18, sondern drehfest auf der Rotorwelle 36. Der Zahnstangenabschnitt 13 des Schräglenkers 9 ist außerdem beidseitig mit einer ersten Verzahnung 41 und einer gegenüberliegenden zweiten Verzahnung 42 ausgeführt. Die erste Verzahnung 41 kämmt gemäß der Fig. 4 mit dem Antriebszahnrad 14, während die zweite Verzahnung 42 mit einem Ritzel 43 kämmt.

Das Ritzel 43 ist über eine Zwischenwelle 44 mit einem Stirnrad 45 verbunden. Das Stirnrad 45 der Getriebestufe I ist wiederum über eine Zwischenübersetzung 46 mit dem Stator 18 in Zahneingriff. Dadurch ist gewährleistet, dass sich der Stator 18 und der Rotor 19 zueinander gegensinnig drehen. Eine derartige Zwischenübersetzungsstufe kann bei Bedarf auch im ersten Ausführungsbeispiel verwendet werden, um gegebenenfalls eine Relativdrehzahl zwischen dem Rotor 19 und dem Stator 18 zu erhöhen.

## Patentansprüche

1. Radaufhängung für ein Kraftfahrzeug, mit einem am Fahrzeugaufbau (7) befestigten elektrischen Schwingungsdämpfer (16), der einen Generator (15) aufweist, der zur Erzeugung von Induktionsspannung durch translatorische Radbewegungen (B) des Fahrzeugrads (1) antreibbar ist, **dadurch gekennzeichnet, dass** der Stator (18) und der Rotor (19) des Generators (15) über zumindest eine Getriebestufe (1, II) miteinander verbunden sind, und ein Getriebeelement der Getriebestufe (I, II) ein Antriebszahnrad (14) eines Zahnstangentriebs (11) ist, der mit einem den Radbewegungen (B) folgenden Radträger (3) der Radaufhängung in Antriebsverbindung ist.

2. Radaufhängung nach Anspruch 1, **dadurch gekennzeichnet, dass** der Zahnstangentrieb (11) ein sich zwischen dem Radträger (3) und dem Fahrzeugaufbau (7) erstreckendes Radführungselement (9) aufweist, etwa einen Querlenker, Längslenker oder dergleichen, der mit einem Zahnstangenabschnitt (13) in Zahneingriff mit dem Antriebszahnrad (14) ist.

3. Radaufhängung nach Anspruch 2, **dadurch gekennzeichnet, dass** der Zahnstangentrieb (11) eine Anlenkstelle (S) zwischen dem Radführungselement (9) und dem Fahrzeugaufbau (7) bildet, insbesondere am radträgerfernen Ende des Radführungselements (9).

4. Radaufhängung nach Anspruch 2 oder 3, **dadurch gekennzeichnet, dass** das Radführungselement (9) über ein Schwenklager (10) gelenkig mit dem Radträger verbunden ist.

5. Radaufhängung nach einem der vorhergehenden Ansprüchen, **dadurch gekennzeichnet, dass** das Antriebszahnrad (14) des Zahnstangentriebs (11) auf dem Stator (19) drehfest sitzt.

6. Radaufhängung nach einem der vorhergehenden Ansprüche, **dadurch gekennzeichnet, dass** die Getriebestufe (I, II) als ein Planentengetriebe ausgeführt ist.

7. Radaufhängung nach Anspruch 6, **dadurch gekennzeichnet, dass** das radial äußere Hohlrad (20) der Getriebestufe (I) und der Stator (18) des Generators (15) eine einstückige Baueinheit bilden, und/oder das Hohlrad (20) das Eingangselement der Getriebestufe (I) ist, über das Antriebsmomente in die erste Getriebestufe (I) einleitbar sind.

8. Radaufhängung nach Anspruch 6 oder 7, **dadurch gekennzeichnet, dass** das radial innere Sonnenrad (23) des Planentengetriebes als Ausgangselement wirkt, das drehfest auf einer Rotorwelle (36) sitzt oder drehfest mit einem Eingangselement (29) einer zweiten Getriebestufe (II) verbunden ist.

9. Radaufhängung nach einem der Ansprüche 6, 7 oder 8, **dadurch gekennzeichnet, dass** der Planentenradträger (25) der ersten Getriebestufe (I) drehfest am Fahrzeugaufbau (7) abgestützt ist.

10. Radaufhängung nach Anspruch 8 oder 9, **dadurch gekennzeichnet, dass** das Sonnenrad (23) der ersten Getriebestufe (I) drehfest mit dem als Eingangselement wirkenden Planetenradträger (29) des Planentengetriebes der zweiten Getriebestufe (II) verbunden ist.

11. Radaufhängung nach Anspruch 10, **dadurch gekennzeichnet, dass** das Hohlrad (21) des Planetengetriebes der zweiten Getriebestufe (II) drehfest am Fahrzeugaufbau (7) abgestützt ist.

12. Radaufhängung nach Anspruch 11, **dadurch gekennzeichnet, dass** das Sonnenrad (23) des Planetengetriebes der zweiten Getriebestufe (II) als Ausgangselement wirkt, das mit der Rotorwelle (36) des Generators (15) verbunden ist.

13. Radaufhängung nach einem der Ansprüche 1 bis 4, **dadurch gekennzeichnet, dass** das Antriebszahnrad (14) des Zahnstangentriebs (11) drehfest auf der Rotorwelle (36) des Generators (15) sitzt.

14. Radaufhängung nach Anspruch 13, **dadurch gekennzeichnet, dass** die Zahnstange (13) des Zahnstangentriebs (11) beidseitig mit einer ersten und einer zweiten Verzahnung (41, 42) ausgebildet ist, und/oder insbesondere mit einer ersten Verzahnung (41) das auf der Rotorwelle (36) sitzende erste Antriebszahnrad (14) und mit einer zweiten Verzahnung (42) ein auf dem Stator (18) sitzende zweite Antriebszahnrad (43) antreibt.

## Claims

1. Wheel suspension for a motor vehicle, comprising an electric vibration damper (16) which is attached to the vehicle body (7) and has a generator (15) which can be driven by translational wheel movements (B) of the vehicle wheel (1) for generating an induced voltage, **characterised in that** the stator (18) and rotor (19) of the generator (15) are interconnected via at least one gear stage (I, II), and one gear element of the gear stage (I, II) is a driving toothed wheel (14) of a rack-and-pinion drive (11) which is drivingly connected to a wheel carrier (3), of the wheel suspension, which follows the wheel movements (B).

2. Wheel suspension according to claim 1, **characterised in that** the rack-and-pinion drive (11) has a wheel guide element (9), for example a transverse link, longitudinal link or the like, which extends between the wheel carrier (3) and the vehicle body (7) and is in meshing engagement with the driving toothed wheel (14) via a rack portion (13).

3. Wheel suspension according to claim 2, **characterised in that** the rack-and-pinion drive (11) forms a pivot point (S) between the wheel guide element (9) and the vehicle body (7), in particular at the end of the wheel guide element (9) which is remote from the wheel carrier.

4. Wheel suspension according to either claim 2 or claim 3, **characterised in that** the wheel guide element (9) is hingedly connected via a pivot bearing (10) to the wheel carrier.

5. Wheel suspension according to any of the preceding claims, **characterised in that** the driving toothed wheel (14) of the rack-and-pinion drive (11) is seated on the stator (19) in a rotationally locked manner.

6. Wheel suspension according to any of the preceding claims, **characterised in that** the gear stage (I, II) is constructed as a planetary gear.

7. Wheel suspension according to claim 6, **characterised in that** the radially outer ring gear (20) of the gear stage (I) forms a single-piece unit with the stator (18) of the generator (15), and/or the ring gear (20) is the input element of the gear stage (I), via which drive torques can be introduced into the first gear stage (I).

8. Wheel suspension according to either claim 6 or claim 7, **characterised in that** the radially inner sun gear (23) of the planetary gear operates as an output element which is seated in a rotationally locked manner on a rotor shaft (36) or is connected in a rotationally locked manner to an input element (29) of a second gear stage (II).

9. Wheel suspension according to any of claims 6, 7 or 8, **characterised in that** the planetary gear carrier (25) of the first gear stage (I) is supported in a rotationally locked manner on the vehicle body (7).

10. Wheel suspension according to either claim 8 or claim 9, **characterised in that** the sun gear (23) of the first gear stage (I) is connected in a rotationally locked manner to the planetary gear carrier (29), of the planetary gear of the second gear stage (II), acting as an input element.

11. Wheel suspension according to claim 10, **characterised in that** the ring gear (21) of the planetary gear of the second gear stage (II) is supported in a rotationally locked manner on the vehicle body (7).

12. Wheel suspension according to claim 11, **characterised in that** the sun gear (23) of the planetary gear of the second gear stage (II) operates as an output element which is connected to the rotor shaft (36) of the generator (15).

13. Wheel suspension according to any of claims 1 to 4, **characterised in that** the driving toothed wheel (14) of the rack-and-pinion drive (11) is seated in a rotationally locked manner on the rotor shaft (36) of the generator (15).

14. Wheel suspension according to claim 13, **characterised in that** the rack (13) of the rack-and-pinion drive (11) is formed comprising a first and second toothing (41, 42) on either side, and/or in particular drives the first driving toothed wheel (14) seated on the rotor shaft (36) with a first toothing (41) and a second driving toothed wheel (43) seated on the stator (18) with a second toothing (42).

## Revendications

1. Suspension de roue pour un véhicule automobile, comprenant un amortisseur d'oscillations électriques (16) fixé à la carrosserie (7) du véhicule, lequel amortisseur présente un générateur (15), qui peut être commandé pour la génération d'une tension d'induction par des déplacements en translation (B) de la roue (1) du véhicule, **caractérisée en ce que** le stator (18) et le rotor (19) du générateur (15) sont liés l'un à l'autre via au moins un étage de transmission (I, II) et un élément de l'étage de transmission (I, II) est un pignon d'entraînement (14) d'un engrenage à crémaillère (11), qui est en liaison d'entraînement avec un porte-roue (3) de la suspension de roue qui suit les mouvements (B) de la roue.

2. Suspension de roue selon la revendication 1, **caractérisée en ce que** l'engrenage à crémaillère (11) présente un élément guide-roue (9) s'étendant entre le porte-roue (3) et la carrosserie (7) du véhicule, en fait un bras oscillant transversal, un bras oscillant longitudinal ou similaire, qui est en prise avec le pignon d'entraînement (14) via une section (13) de la crémaillère.

3. Suspension de roue selon la revendication 2, **caractérisée en ce que** l'engrenage à crémaillère (11) forme un point d'articulation (S) entre l'élément guide-roue (9) et la carrosserie (7) du véhicule, en particulier sur l'extrémité porte-roue de l'élément guide-roue (9).

4. Suspension de roue selon la revendication 2 ou la revendication 3, **caractérisée en ce que** l'élément guide-roue (9) est relié au porte-roue à pivotement via un pivot (10).

5. Suspension de roue selon l'une quelconque des revendications précédentes, **caractérisée en ce que** le pignon d'entraînement (14) de l'engrenage à crémaillère (11) s'appuie sur le stator (19) de manière solidaire en rotation.

6. Suspension de roue selon l'une quelconque des revendications précédentes, **caractérisée en ce que** l'étage de transmission (I, II) se présente sous la forme d'un engrenage planétaire.

7. Suspension de roue selon la revendication 6, **caractérisée en ce que** la couronne radialement externe (20) de l'étage de transmission (I) et le stator (18) du générateur (15) forment une unité structurelle d'un seul tenant et/ou la couronne (20) est un élément d'entrée de l'étage de transmission (I) par lequel des moments d'entraînement peuvent être induits dans le premier étage de transmission (I).

8. Suspension de roue selon la revendication 6 ou la revendication 7, **caractérisée en ce que** la roue solaire radialement interne (23) de l'engrenage planétaire agit comme élément de sortie qui s'appuie sur un arbre de rotor (36) de manière solidaire en rotation ou est reliée à un élément d'entrée (29) d'un second étage de transmission (II) de manière solidaire en rotation.

9. Suspension de roue selon l'une quelconque des revendications 6, 7 ou 8, **caractérisée en ce que** le porte-satellite (25) du premier étage de transmission (I) s'appuie sur la carrosserie (7) du véhicule de manière solidaire en rotation.

10. Suspension de roue selon la revendication 8 ou la revendication 9, **caractérisée en ce que** la roue solaire (23) du premier étage de transmission (I) est reliée de manière solidaire en rotation au porte-satellite (29) - agissant comme élément d'entrée - de l'engrenage planétaire du second étage de transmission (II).

11. Suspension de roue selon la revendication 10, **caractérisée en ce que** la couronne (21) de l'engrenage planétaire du second étage de transmission (II) s'appuie sur la carrosserie (7) du véhicule de manière solidaire en rotation.

12. Suspension de roue selon la revendication 11, **caractérisée en ce que** la roue solaire (23) de l'engrenage planétaire du second étage de transmission (II) agit comme élément de sortie qui est relié à l'arbre de rotor (36) du générateur (15).

13. Suspension de roue selon l'une quelconque des revendications 1 à 4, **caractérisée en ce que** le pignon d'entraînement (14) de l'engrenage à crémaillère (11) s'appuie sur l'arbre de rotor (36) du générateur (15) de manière solidaire en rotation.

14. Suspension de roue selon la revendication 13, **caractérisée en ce que** la crémaillère (13) de l'engrenage à crémaillère (11) se présente des deux côtés avec une première et une seconde denture (41, 42), et/ou en particulier entraîne avec une première denture (41) le premier pignon d'entraînement (14) s'appuyant sur l'arbre de rotor (36) et, avec une seconde denture (42), un second pignon d'entraînement (43) s'appuyant sur le stator (18).
